Europäisches Patentamt

European Patent Office

Office européen des brevets

(19)

(11) **EP 1 142 966 A1**

(12) **EUROPEAN PATENT APPLICATION**

(43) Date of publication:
**10.10.2001 Bulletin 2001/41**

(51) Int Cl.⁷: **C09D 11/00**, C09D 11/10

(21) Application number: **01108533.9**

(22) Date of filing: **04.04.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **05.04.2000 JP 2000103154**

(71) Applicant: **Sony Chemicals Corporation Tokyo 103-8312 (JP)**

(72) Inventors:
• **Ito, Akio,**
  **Kanuma-shi, Tochigi 322-8502 (JP)**

• **Murasawa, Yukiko**
  **Kanuma-shi, Tochigi 322-8502 (JP)**
• **Takahashi, Hideaki**
  **Kanuma-shi, Tochigi 322-8502 (JP)**

(74) Representative: **Körber, Wolfhart, Dr. et al Patent- und Rechtsanwälte Mitscherlich & Partner,**
  **Sonnenstrasse 33**
  **80331 München (DE)**

(54) **Ionizing radiation curable ink for ink jet printing and printed product of the same**

(57)    An ink excellent in ink ejection smoothness from the nozzle of an ink jet printer is provided. The ink can be obtained by adding a colorant to a resin liquid containing either a photoreactive monofunctional monomer or a photoreactive bifunctional monomer or both of them and having a viscosity at 25°C of from 1.0 mPa · s to 10.5 mPa · s. Moreover, through exposure of the surface of an image printed using this ink to ionizing radiation, the ink is cured and there is provided a firmly printed image. Furthermore, a printed product 1 having a firmly printed image of high quality is provided by printing an image on the surface of an ink-receiving layer 12 the main component of which is such a resin as polyester resin, acryl-styrene resin, epoxy resin, or phenoxy resin using the abovementioned ink.

*Fig.1a*

11

EP 1 142 966 A1

*Fig.1b*

*Fig.1c*

*Fig.1d*

*Fig.1e*

## Description

## BACKGROUND OF THE INVENTION

### 1. Field of the Invention

The present invention relates to an ink for use in, for example, an ink jet printer.

### 2. Description of the Related Art

In recent years, recording of characters, images, and others by ink jet printing is growing popular, and a variety of inks for ink jet printing have been proposed.

Employed as colorants for inks are for example dyes and pigments, and generally used are liquid ones formed by dispersing such colorants in organic solvents or in mixtures of water and organic solvents.

However, in recent years, there is a demand for inks free from organic solvents from a viewpoint of environmental concern.

Inks utilizing a resin liquid containing a photoreactive monomer instead of an organic solvent are known, and Japanese Patent Laid-Open Application No. Hei 9-183929 discloses a process in which an ink is prepared by mixing a bifunctional (meth)acrylate, a monofunctional monomer and a photopolymerization initiator and, after printing, the surface of a printed image is irradiated with ultraviolet rays to cure the ink.

Bifunctional monomers and monofunctional monomers described above are usually liquid at room temperature before being subjected to photopolymerization and therefore can serve as solvents for colorants.

Further, the use of such inks makes it possible not only to print images on such a variety of substrates as paper and plastics but to provide printed images more durable than those in cases where ordinary organic solvent-based inks are employed.

However, when an ink is prepared by adding a colorant of the pigment type to a resin liquid comprising such a photoreactive monomer as described above, pigment particles are not fully dispersed therein and in some cases cohere in the ink.

Recently, the nozzle diameter of the ink jet printer has been increasingly downsized to minuteness for the purpose of improving the quality of printed images, and the use of the aforementioned inks in such ink jet printer will cause trouble in discharge of ink from the nozzle.

Although reduction of the added amount of the pigment as the colorant permits a smooth ejection of ink from the nozzle, if the amount of the pigment to be added is small, the quality of the printed image will be degraded.

## SUMMARY OF THE INVENTION

The present invention was accomplished to solve such technical problems as have been pointed out in the past, and an object thereof is to prepare, without using an organic solvent, an ink which can be discharged by the ink jet printer.

As a result of diligent studies to solve the aforementioned problems, the inventors have found that the addition of a pigment to a resin liquid having a viscosity at $25°C$ which is 1.0 mPa·s or more but 10.5 mPa·s or less enables the pigment to be dispersed in the resin liquid satisfactorily.

The present invention accomplished based on the above finding is an ink comprising: at least one colorant; and a resin liquid containing at least one photoreactive monofunctional monomer or at least one photoreactive bifunctional monomer, wherein a viscosity of the resin liquid at $25°C$ is 1.0 mPa·s or more but 10.5 mPa·s or less.

The present invention is an ink comprising: at least one colorant; and a resin liquid containing at least one photoreactive monofunctional monomer and at least one photoreactive bifunctional monomer, wherein an average viscosity A of the resin liquid at $25°C$ calculated using the formula: $A = (W_1 \times A_1 + W_2 \times A_2)/(W_1 + W_2)$ where $A_1$ is a viscosity of the photoreactive monofunctional monomer at $25°C$, $A_2$ is a viscosity of the photoreactive bifunctional monomer at $25°C$, $W_1$ is a weight of the photoreactive monofunctional monomer, and $W_2$ is a weight of the photoreactive bifunctional monomer, is 1.0 mPa·s or more but 10.5 mPa·s or less.

The present invention is the ink, wherein the viscosity $A_1$ of the photoreactive monofunctional monomer at $25°C$ is 1.0 mPa·s or more but 3.0 mPa·s or less and the viscosity $A_2$ of the photoreactive bifunctional monomer at $25°C$ is 5.0 mPa·s or more but 10.5 mPa·s or less.

The present invention is the ink, wherein functional groups of the photoreactive monofunctional monomer and the photoreactive bifunctional monomer are acryloyl groups.

The present invention is a printed product comprising:

an ink-receiving layer containing as a main component at least one resin selected from a group consisting of polyester resin, styrene-acrylic resin, epoxy resin, and phenoxy resin, and
being formed an image on a surface of the ink-receiving layer, wherein the image is made with an ink comprising at least one colorant,and a resin liquid containing at least one
photoreactive monofunctional monomer or at least one
photoreactive bifunctional monomer,wherein a viscosity of the resin liquid at 25°C is 1.0 mPa·s or more but 10.5 mPa·s or less.

The present invention is a printed product comprising:
an ink-receiving layer containing as a main component at least one resin selected from a group consisting of polyester resin, styrene-acrylic resin, epoxy resin, and phenoxy resin, and being formed an image on a surface of the ink-receiving layer, wherein the image is made with an ink comprising at least one colorant, and a resin liquid containing at least one photoreactive monofunctional monomer and at least one photoreactive bifunctional monomer,wherein an average viscosity A of the resin liquid at 25°C calculated using the formula: $A = (W_1 \times A_1 + W_2 \times A_2)/(W_1 + W_2)$ where $A_1$ is a viscosity of the photoreactive monofunctional monomer at 25°C, $A_2$ is a viscosity of the photoreactive bifunctional monomer at 25°C, $W_1$ is a weight of the photoreactive monofunctional monomer, and $W_2$ is a weight of the photoreactive bifunctional monomer, is 1.0 mPa·s or more but 10.5 mPa·s or less.

The present invention is the printed product, wherein the viscosity $A_1$ of the photoreactive monofunctional monomer at 25°C is 1.0 mPa·s or more but 3.0 mPa·s or less and the viscosity $A_2$ of the photoreactive bifunctional monomer at 25°C is 5.0 mPa·s or more but 10.5 mPa·s or less.

The present invention is the printed product, wherein functional groups of the photoreactive monofunctional monomer and the photoreactive bifunctional monomer are acryloyl groups.

The present invention is the printed product, wherein the glass transition temperature of the polyester resin is 40°C or more but less than 70°C.

The constitution of the present invention is as described above, and the ink of the present invention comprises a resin liquid containing at least one photoreactive monomer and a colorant. Generally, when the number of functional groups of a photoreactive monomer is smaller, the viscosity of the monomer is lower. Therefore, the use of either a monofunctional monomer having one reactive group or a bifunctional monomer having two reactive groups makes it possible to prepare a resin liquid having a viscosity at 25°C of from 1.0 mPa·s to 10.5 mPa·s.

An ink which is smoothly ejected from a nozzle of an ink jet printer can be obtained through the use of the resin liquid of which the viscosity falls within such a range as specified above and a colorant of the pigment type without reduction of the amount of the colorant to be added.

Further, exposure of the printed image formed with the ink of the present invention to ionizing radiation such as ultraviolet rays causes polymerization of the photoreactive curable resin contained in the ink to cure the ink. As a result, there is provided a firmly printed image.

Generally, the viscosity $A_2$ of the photoreactive bifunctional monomer is higher than the viscosity $A_1$ of the photoreactive monofunctional monomer. Thus, a bifunctional monomer having a viscosity at 25°C exceeds 10.5 mPa·s cannot by itself be used in the ink of the present invention.

However, by preparing a resin liquid having an average viscosity A represented by the following formula:

$$A = (W_1 \times A_1 + W_2 \times A_2)/(W_1 + W_2)$$

by mixing such a bifunctional monomer and a monofunctional monomer in amounts of $W_2$ and $W_1$, respectively, it is made possible to adjust its average viscosity A so as to be 1.0 mPa·s or more but 10.5 mPa·s or less.

In the case where the resin liquid is composed of a bifunctional monomer and a monofunctional monomer, the total weight of the resin liquid is expressed by the formula: $W_1 + W_2$.

Since the reactivity of the bifunctional monomer is higher than that of the monofunctional monomer, the use of such a resin liquid containing both photoreactive bifunctional monomer and photoreactive monofunctional monomer described above realizes the provision of an ink having higher curability than in the case where a resin liquid containing only a photoreactive monofunctional monomer is employed.

Furthermore, the average viscosity of the resin liquid is always kept 1.0 mPa·s or more but 10.5 mPa·s or less by using a photoreactive bifunctional monomer of which the viscosity at 25°C is from 5.0 mPa·s or more but 10.5 mPa·s or less and a photoreactive monofunctional monomer of which the viscosity at 25°C is 1.0 mPa·s or more but less than 3.0 mPa·s regardless of the blending ratio (weight ratio) of the monomers.

## BRIEF DESCRIPTION OF THE DRAWINGS

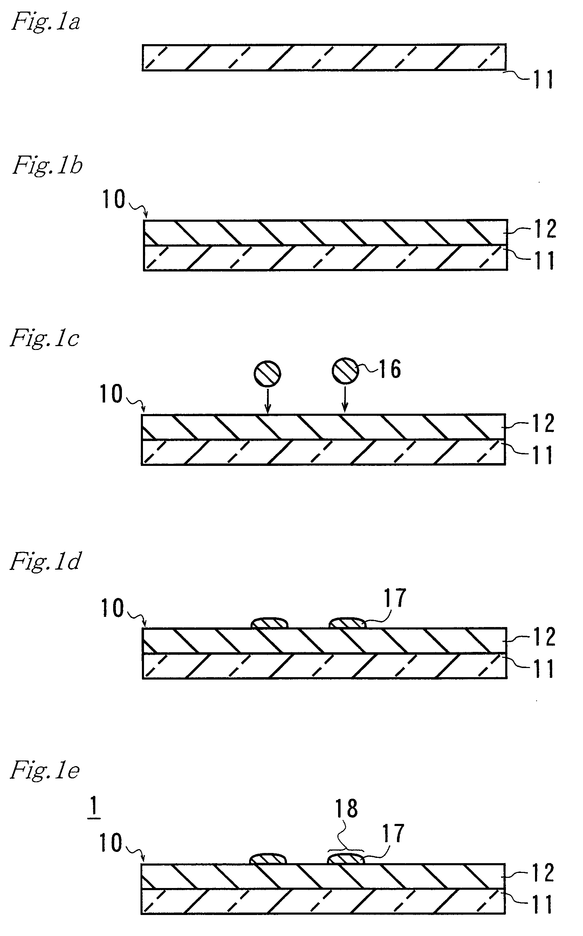

Figs. 1(a) - 1(e) illustrate the process for producing a printed product using the ink of the present invention.

## DETAILED DESCRIPTION OF THE PREFERRED EMBODIMENTS

Hereinafter, examples of the ink for use in ink jet printers of the present invention will be described in further detail together with comparative examples.

<Example 1>

First, a dispersion was prepared by mixing 4 parts by weight of carbon black (trade name "Cabot BPL" manufactured by Cabot Corporation) as a colorant, 6 parts by weight of a dispersant (trade name "Ajisper PB711" manufactured by Ajinomoto Co., Ltd.) and, as the photoreactive bifunctional monomer, 90 parts by weight of 1,4-butanediol diacrylate having a viscosity at 25°C of 8.0 mPa·s (trade name "SR-213" manufactured by Nippon Kayaku Co., Ltd.) and subjecting the resulting mixture to sand-mill dispersion for 12 hours.

Then, to the dispersion thus obtained was added 15 parts by weight of a photopolymerization initiator followed by sand-mill dispersion for 1 hour. Employed as the photopolymerization initiator here is one that is constituted of three different kinds of polymerization initiators(trade name "Irgacure 369" manufactured by Ciba Specialty Chemicals; trade name "Kayacure DETX-S" manufactured by Nippon Kayaku Co., Ltd.; trade name "Kayacure EPA" manufactured by Nippon Kayaku Co., Ltd.) mixed in equal amounts by weight. Thereafter, filtration with a stainless mesh having a pore size of about 5 μm was conducted to prepare the objective ink.

The following "ink viscosity test", "ink ejection smoothness test", and "curability test" were performed to the ink.

(Ink viscosity)

The viscosity of the ink prepared through the above-described procedure as a whole was measured at 25°C using a vibration-type viscometer (trade name "CJV5000" manufactured by A&D Co., Ltd.). The measured value is shown in the following Table 1.

(Ink ejection smoothness test)

The ink prepared through the above-described procedure was fed to an ink jet printer (trade name "MJ510C" manufactured by Seiko Epson Corporation) and an image was printed. The condition of the printed image was visually examined and graded by the following criteria.

○: Smooth discharge of ink from the nozzle without unevenness in print, such as an image printed awry or a blurred image.

Δ: Unevenness in print observed, but its practical use presents no problem.

×: Unevenly printed.

The results are shown in the following Table 1.

(Curability test)

After having been irradiated with ultraviolet rays at 1,200 mJ/cm² by an 80-W metal halide lamp, the surface of the printed image was rubbed ten times with a cotton cloth impregnated with ethanol under a load of 200 g. The printed image after the rubbing was visually examined. If the printed image was not wiped away, the curability was graded ○. If the image was rubbed away, the curability was graded ×. The results are shown in Table 1 below.

Table 1:

| Evaluation of Ink | | | | | |
|---|---|---|---|---|---|
| | Photoreactive monomer | Resin liquid viscosity | Ink viscosity | Ink ejection smoothness | Curability |
| Example 1 | 1,4 - butanediol diacrylate | 8.0 | 11.0 | ○ | ○ |

Table 1: (continued)

| Evaluation of Ink | | | | | |
|---|---|---|---|---|---|
| | Photoreactive monomer | Resin liquid viscosity | Ink viscosity | Ink ejection smoothness | Curability |
| Example 2 | Nonanediol diacrylate | 9.3 | 12.6 | ○ | ○ |
| Example 3 | Isobonyl acrylate | 8.3 | 11.3 | ○ | ○ |
| Example 4 | Phenoxy ethyl acrylate | 9.8 | 14. 7 | ○ | ○ |
| Example5 | Diethylane glycol diacrylate | 10.5 | 15.5 | △ | ○ |
| Example 6 | 4-hydroxybutyl acrylate | 10.5 | 16.3 | △ | ○ |
| Example 7 | Isobonyl methacrylate | 8.2 | 12.0 | ○ | × |
| Example 8 | Diethylane glycol methacrylate | 6.5 | 10.5 | ○ | × |
| Comparative example 1 | Tripropylene glycol diacrylate | 12.4 | 17.9 | × | ○ |
| Comparative example 2 | Dicyclopentenyl acrylate | 13.4 | 18.2 | × | ○ |
| (Values in Table 1 are viscosities at 25°C (unit : mPa·s)) | | | | | |

<Example 2>

Nonanediol diacrylate (trade name "FA-129A" manufactured by Hitachi Chemical Co., Ltd., viscosity = 9.3 mPa·s) was used as the photoreactive bifunctional monomer. To a resin liquid constituted of this photoreactive bifunctional monomer were added the same colorant and the same photopolymerization initiator as those in Example 1 in such amounts as to be the same in percentage by weight as in Example 1 respectively. The same procedure as in Example 1 was followed to prepare an ink.

<Example 3>

Isobonyl acrylate (trade name "IBXA" manufactured by Osaka Organic Chemical Industry Co., Ltd., viscosity = 8.3 mPa· s) was used as the photoreactive bifunctional monomer. To a resin liquid constituted of this photoreactive bifunctional monomer were added the same colorant solution and the same photopolymerization initiator as those in Example 1 in such amounts as to be the same in percentage by weight as in Example 1 respectively. The same procedure as in Example 1 was followed to prepare an ink.

<Example 4>

Phenoxy ethyl acrylate (trade name "NK-ESTER" AMP-10G" manufactured by Shin-Nakamura Chemical Co., Ltd., viscosity = 9.8 mPa·s) was used as the photoreactive monofunctional monomer. To a resin liquid constituted of this photoreactive monofunctional monomer were added the same colorant and the same photopolymerization initiator as those in Example 1 in such amounts as to be the same in percentage by weight as in Example 1 respectively. The same procedure as in Example 1 was followed to prepare an ink.

<Example 5>

Diethylene glycol diacrylate having a viscosity at 25°C of 10.5 mPa·s was used as the photoreactive bifunctional monomer (trade name "SR-230" manufactured by Nippon Kayaku Co., Ltd.). To a resin liquid constituted of this photoreactive bifunctional monomer were added the same colorant and the same photopolymerization initiator as those in Example 1 in such amounts as to be the same in percentage by weight as in Example 1 respectively. The same procedure as in Example 1 was followed to prepare an ink.

<Example 6>

4-hydroxybutyl acrylate having a viscosity at 25°C of 10.5 mPa·s was used as the photoreactive monofunctional monomer (trade name "4-HBA" manufactured by Osaka Organic Chemical Industry Co., Ltd.). To a resin liquid constituted of this photoreactive monofunctional monomer were added the same colorant and the same photopolymerization initiator as those in Example 1 in such amounts as to be the same in percentage by weight as in Example 1 respectively. The same procedure as in Example 1 was followed to prepare an ink.

<Example 7>

Isobonyl methacrylate (trade name "LIGHT ESTER IB-X" manufactured by Kyoeisha Chemical co., Ltd., viscosity = 6.2 mPa·s at 25°C) was used as the photoreactive monofunctional monomer. To a resin liquid constituted of this photoreactive monofunctional monomer were added the same colorant and the same photopolymerization initiator as those in Example 1 in such amounts as to be the same in percentage by weight as in Example 1 respectively. The same procedure as in Example 1 was followed to prepare an ink.

<Example 8>

Diethylene glycol methacrylate (trade name "SR-231E" manufactured by Nippon Kayaku Co., Ltd., viscosity = 6.5 mPa·s at 25°C) was used as the photoreactive bifunctional monomer. To a resin liquid constituted of this photoreactive bifunctional monomer were added the same colorant and the same photopolymerization initiator as those in Example 1 in such amounts as to be the same in percentage by weight as in Example 1 respectively. The same procedure as in Example 1 was followed to prepare an ink.

Under the same conditions as in Example 1, "Ink viscosity test," "Ink ejection smoothness test," and "Curability test" were performed to each of the inks of Examples 2 to 6. The results are shown in Table 1 above.

<Comparative Example 1>

Tripropylene glycol diacrylate having a viscosity at 25°C of 12.4 mPa·s was used as the photoreactive bifunctional monomer (trade name "NK-ESTER APG-200" manufactured by Shin-Nakamura Chemical Co., Ltd.). To a resin liquid constituted of this photoreactive bifunctional monomer were added the same colorant and the same photopolymerization initiator as those in Example 1 in such amounts as to be the same in percentage by weight as in Example 1 respectively. An ink was prepared in the same manner as in Example 1.

<Comparative Example 2>

Dicyclopentenyl acrylate having a viscosity at 25°C of 13.4 mPa·s was used as the photoreactive monofunctional monomer (trade name "SR-230" manufactured by Nippon Kayaku Co., Ltd.). To a resin liquid constituted of this photoreactive monofunctional monomer were added the same colorant and the same photopolymerization initiator as those in Example 1 in such amounts as to be the same in percentage by weight as in Example 1 respectively. An ink was prepared in the same manner as in Example 1.

Under the same conditions as in Example 1, "Ink viscosity test," "Ink ejection smoothness test," and "Curability test" were performed to each of the inks of Comparative Examples 1 to 2. The results are shown in Table 1 above.

As can be seen from the results shown in Table 1, Examples 1 to 8 in which the resin liquids having viscosity at 25°C 1.0 mPa·s or more but 10.5 mPa·s or less were employed were superior in ink ejection smoothness to Comparative Examples 1 and 2 in which the resin liquids having viscosity exceeding 10.5 mPa·s were employed.

Of these Examples 1 to 8, the viscosity of each of the inks prepared in Examples 1 to 4, 7, and 8 was, as a whole, lower than 15.5 mPa·s, and they were particularly excellent in ink ejection smoothness from the nozzle of the printer.

Moreover, the inks prepared in Examples 1 to 6 were excellent in curability. This may be because the reactivity of the acrylates employed in Examples 1 to 4 is higher than that of the (meth)acrylates used in Examples 5 and 6.

<Examples 9a to 9e>

In this example, 1,4-butanediol acrylate having a viscosity at 25°C of 5.5 mPa·s as the photoreactive bifunctional monomer (trade name "SR-213" manufactured by Nippon Kayaku Co., Ltd.) and tetrahydrofurfuryl acrylate (trade name "SR-285" manufactured by Nippon Kayaku Co., Ltd., viscosity = 3.7 mPa · s at 25°C) as the photoreactive monofunctional monomer were used. To a resin liquid constituted of these monomers were added the same colorant and the same photopolymerization initiator as those in Example 1 in such amounts as to be the same in percentage by weight as in Example 1 respectively. The same procedure as in Example 1 was followed to prepare an ink.

Examples 9a to 9e are cases in which the proportions by weight (wt%) of the photoreactive monofunctional monomer and the photoreactive bifunctional monomer constituting each resin liquid the weight of which is taken to be 100 (wt%) are individually varied as specified in Table 2 shown below.

The following "Ink ejection smoothness test" and "Curability test" were performed to each of these inks.

(Ink ejection smoothness test)

Each ink was fed to an ink jet printer (trade name "PM-700C" manufactured by Seiko Epson Corporation) and an image was printed. The condition of the printed image was visually examined and graded by the following criteria.

○: Smooth discharge of ink from the nozzle without unevenness in print, such as an image printed awry or a blurred image.

×: Unevenly printed.

The results are shown in the following Table 2.

(Curability test)

After having been irradiated with ultraviolet rays at 2,400 mJ/cm$^2$ using the same metal halide lamp as that employed in Example 1, the surface of the printed image was rubbed ten times with a cotton cloth impregnated with ethanol under a load of 200 g.

The printed image after the rubbing was visually inspected. If the printed image was not wiped away, the curability was graded ○. If the image was rubbed away, the curability was graded ×. The results are shown in Table 2 below.

The viscosity of each of the inks of Examples 9a and 9e was determined under the same conditions as those in "Ink viscosity test" carried out in Example 1, and the results are shown in Table 2.

Table 2 :

| Test Results of the Inks of Examples 9a to 9e | | | | | |
|---|---|---|---|---|---|
| | Examples 9a ~ 9e | | | | |
| | 9 a | 9 b | 9 c | 9 d | 9 e |
| Photoreactive bifunctional monomer weight (wt%) | 100 | 50 | 33 | 17 | 0 |
| Photoreactive monofunctional monomer weight (wt%) | 0 | 50 | 67 | 83 | 100 |
| Ink viscosity (mPa·s) | 9.6 | — | — | — | 7.15 |
| Ink ejection smoothness | ○ | ○ | ○ | ○ | ○ |
| Curability | ○ | ○ | ○ | ○ | × |
| Photoreactive-bifunctional-monomer : 1,4-butanediol diacrylate Photoreactive monofunctional monomer : Tetrahydrofurfuryl acrylate | | | | | |

<Examples 10a to 10e>

Diethylene glycol diacrylate having a viscosity at 25°C of 10.5 mPa·s as the photoreactive bifunctional monomer (trade name "SR-230" manufactured by Nippon Kayaku Co., Ltd.) and the same monofunctional monomer as the one employed in Examples 9a to 9e as the photoreactive monofunctional monomer were used. To a resin liquid constituted of these monomers were added the same colorant and the same photopolymerization initiator as those employed in Example 1 in such amounts as to be the same in percentage by weight as in Example 1 respectively. An ink was prepared in the same manner as in Example 1.

Examples 10a to 10e are cases in which the proportions by weight (wt%) of the photoreactive monofunctional monomer and the photoreactive bifunctional monomer constituting each resin liquid the total weight of which is taken to be 100 (wt%) are varied as specified in Table 3 shown below.

Under the same conditions as in Examples 9a to 9e, "Ink ejection smoothness test" and "Curability test" were performed to each of the inks of Examples 10a to 10e. Moreover, the viscosity of each of the inks prepared in Examples 10a and 10e was determined under the same conditions as those in "Ink viscosity test" carried out in Example 1. The results are shown in Table 3 below.

Table 3 :

| Test Results of the Inks of Examples 10a to 10e | | | | | |
|---|---|---|---|---|---|
| | Examples 10a ~ 10e | | | | |
| | 10 a | 10 b | 10 c | 10 d | 10 e |
| Photoreactive bifunctional monomer weight (wt%) | 100 | 50 | 33 | 17 | 0 |
| Photoreactive monofunctional monomer weight (wt%) | 0 | 50 | 67 | 83 | 100 |
| Ink viscosity (mPa·s) | 11.3 | — | — | — | 7. 15 |
| Ink ejection smoothness | ○ | ○ | ○ | ○ | ○ |
| Curability | ○ | ○ | ○ | ○ | × |
| Photoreactive bifunctional monomer: Diethylene glycol diacrylate Photoreactive monofunctional monomer : Tetrahydrofurfuryl acrylate | | | | | |

<Examples 11a to 11e>

The same bifunctional monomer as the one employed in Examples 9a to 9e as the photoreactive bifunctional monomer and isodecyl acrylate having a viscosity at 25°C of 2.8 mPa·s as the photoreactive monofunctional monomer (trade name "SR395" manufactured by Nippon Kayaku Co., Ltd.) were used. To a resin liquid constituted of these monomers were added the same colorant and the same photopolymerization initiator as those used in Example 1 in such amounts as to be the same in percentage by weight as in Example 1 respectively. The same procedure as in Example 1 was followed to prepare an ink.

Examples 11a to 11e are cases in which the proportions by weight (wt%) of the photoreactive monofunctional monomer and the photoreactive bifunctional monomer constituting each resin liquid the total weight of which is taken to be 100 (wt%) are varied as specified in Table 4 shown below.

Under the same conditions as in Examples 9a to 9e, "Ink ejection smoothness test" and "Curability test" were carried out on each of the inks of Examples 11a to 11e. Moreover, the viscosity of each of the inks prepared in Examples 11a and lie was determined under the same conditions as those in "Ink viscosity test" performed in Example 1. The results are shown in Table 4 below.

Table 4 :

| Test Results of the Inks of Examples 11a to 11e | | | | | |
|---|---|---|---|---|---|
| | Examples 11a ~ 11e | | | | |
| | 11 e | 11 b | 11 c | 11 d | 11 e |
| Photoreactive bifunctional monomer weight (wt%) | 100 | 50 | 33 | 17 | 0 |
| Photoreactive monofunctional monomer weight (wt%) | 0 | 50 | 67 | 83 | 100 |
| Ink viscosity (mPa·s) | 9.6 | — | — | — | 5.05 |
| Ink ejection smoothness | ○ | ○ | ○ | ○ | ○ |
| Curability | ○ | ○ | ○ | × | × |
| Photoreactive bifunctional monomer: 1,4 butanediol diacrylate Photoreactive monofunctional monomer : Isodecyl acrylate | | | | | |

As is obvious from Tables 2, 3, and 4, the inks of Examples 9a to 9e, 10a to 10e, and 11a to 11e provided excellent results in "Ink ejection smoothness test." Particularly, the inks of Examples 9a to 9d, 10a to 10d, and 11a to 11c provided excellent results also in "Curability test," confirming that the proportion by the weight of the photoreactive bifunctional monomer is higher, the curability of the ink is more excellent.

Moreover, although the inks of Examples 9e, 10e, 11d, and 11e were graded "× " in "Curability test", their practical use presents no problem.

Further, of the inks of Examples 9d, 10d, and lid in which the percentage by weight (wt%) of the photoreactive monofunctional monomer contained in the resin liquid was 83%, the inks of Examples 9d and 10d kept their high curability. Accordingly, the reactivity of the photoreactive monofunctional monomer employed in Examples 9a to 9e and 10a to 10e (tetrahydrofurfuryl acrylate) is supposed to be higher than that of the photoreactive monofunctional monomer employed in Examples 11a to 11e (isodecyl acrylate).

<Example 12>

Using the same photoreactive bifunctional monomer and photoreactive monofunctional monomer as those employed in Examples 9a to 9e, a mixture constituted of 60 parts by weight of this photoreactive monofunctional monomer and 30 parts by weight of the bifunctional monomer was prepared as a resin liquid.

To the resin liquid were added the same colorant and the same photopolymerization initiator as those in Example 1 in such amounts that the percentage by weight of each component was the same as in Example 1 respectively, and an ink was prepared following the same procedure as in Example 1.

The viscosity of the ink as a whole was measured under the same conditions as those in "Ink viscosity test" performed in Example 1. The results are shown in the following Table 5.

Table 5:

| Example 12 (black) | | | |
|---|---|---|---|
| | | Parts by weight | Ink viscosity |
| Pigment | Cabot BPL | 4 | 7. 5 mPa·s |
| Dispersant | Ajisper PB711 | 6 | |
| bifunctional monomer | 1,4 butanediol diacrylate | 3 0 | |
| monofunctional monomer | Tetrahydrofurfuryl acrylate | 6 0 | |
| Initiator | Irgacure 369 | 5 | |
| | Kayacure DETX-S | 5 | |
| | Kayacure - EPA | 5 | |

<Example 13>

2.9 parts by weight of a yellow pigment as a colorant (trade name "Resino Color 5206" manufactured by Resino Color Industry Co., Ltd.) and 11.4 parts by weight of a dispersant (trade name "Disper BYK-161" manufactured by Byk-Chemie) were mixed together to prepare a colorant-dispersed solution.

Thereafter, using the same photoreactive bifunctional monomer as the one in Examples 9a to 9e and, as the photoreactive monofunctional monomer, isooctyl acrylate having a viscosity at 25°C of 2.0 mPa·s (trade name "SR-440" manufactured by Nippon Kayaku Co., Ltd.), 85.8 parts by weight of a resin liquid was prepared by mixing 42.9 parts by weight each of the monomers.

To this resin liquid were added 14.3 parts by weight of the colorant-dispersed solution described above and 15 parts by weight of the same photopolymerization initiator as the one employed in Example 1, and an ink was prepared following the same procedure as in Example 1.

The viscosity of this ink was determined under the same conditions as those in "Ink viscosity test" performed in Example 1. The results are shown in the following Table 6.

Table 6

| Example 13 (yellow) | | | |
|---|---|---|---|
| | | Parts by weight | Ink viscosity |
| Pigment | Resino color 5206 | 2. 9 | 8. 4 mPa·s |
| Dispersant | Byk-Chemie BYK-161 | 1 1. 4 | |
| bifunctional | 1,4 butanediol diacrylate | 4 2. 9 | |
| monomer monofunctional monomer | Isooctyl acrylate | 42. 9 | |
| Initiator | Irgacure 369 | 5 | |
| | Kayacure DETX-S | 5 | |
| | Kayacure - EPA | 5 | |

<Example 14>

A colorant-dispersed solution was prepared under the same conditions as in Example 13 with the exception of the use of a magenta pigment as a colorant(trade name "Resino Color 5205" manufactured by Resino Color Industry Co., Ltd.) instead of the yellow pigment employed in Example 13.

Employing the same resin liquid as that employed in Example 12, 14.3 parts by weight of the above-described colorant-dispersed solution and 15 parts by weight of the same photopolymerization initiator as that employed in Example 1 were added to 85.8 parts by weight of the resin liquid, and an ink was prepared in the same manner as in Example 1.

The viscosity of the ink thus prepared was determined under the same conditions as those in "Ink viscosity test" conducted in Example 1. The results are shown in the following Table 7.

Table 7

| Example 14 (magenta) | | | |
|---|---|---|---|
| | | Parts by weight | Ink viscosity |
| Pigment | Resino color 5205 | 2. 9 | 7. 9 mPa·s |
| Dispersant | Byk-Chemie BYK-161 | 1 1. 4 | |
| bifunctional monomer | 1,4 butanediol diacrylate | 4 2. 9 | |
| monofunctional monomer | Isooctyl acrylate | 4 2. 9 | |
| Initiator | Irgacure 369 | 5 | |
| | Kayacure DETX-S | 5 | |
| | Kayacure - EPA | 5 | |

<Example 15>

A colorant-dispersed solution was prepared by mixing 2.9 parts by weight of a cyan pigment as a colorant (trade name "Resino Color 5204" manufactured by Resino Color Industry Co., Ltd.) and 3.9 parts by weight of a dispersant (trade name "Disper BYK-161" manufactured by Byk-Chemie).

Thereafter, using the same photoreactive bifunctional monomer and photoreactive monofunctional monomer as those employed in Examples 9a to 9e, a resin liquid was prepared by mixing 43.3 parts by weight of the bifunctional monomer into 50 parts by weight of the monofunctional monomer.

To 93.3 parts by weight of the resin liquid were added 6.8 parts by weight of the aforementioned colorant-dispersed solution and 9 parts by weight of the same photopolymerization initiator as that employed in Example 1, and an ink was prepared in the same manner as in Example 1.

The viscosity of the ink was determined under the same conditions as those in Example 1. The results are shown in the following Table 8.

Table 8

| Example 15 (cyan) | | | |
|---|---|---|---|
| | | Parts by weight | Ink viscosity |
| Pigment | Resino color 5204 | 2. 9 | 7. 2 mPa˙ s |
| Dispersant | Byk-Chemie BYK-161 | 3. 9 | |
| bifunctional monomer | 1,4 butanediol diacrylate | 4 3. 3 | |
| monofunctional monomer | Tetrahydrofurfuryl acrylate | 5 0. 0 | |
| Initiator | Irgacure 369 | 2 | |
| | Kayacure DETX-S | 2 | |
| | Kayacure - EPA | 2 | |

As can be seen from Tables 5 to 8, in each of Examples 12 to 15 where the black pigment and color pigments (yellow, magenta, cyan) were employed, respectively, the viscosity of the resulting ink as a whole was lower than 15.5 mPa˙s. These inks of Examples 12 to 15 exhibited excellent ink ejection smoothness when used in an ink jet printer, proving any of the black and color pigments to be adoptable for use in the ink of the present invention.

Examples 13 to 15 in which the color pigments were employed as colorants described above are cases of the use of a monofunctional acrylate together with a bifunctional monomer. However, the present invention is not limited thereto.

Even if pigment, black or color, is employed, a resin liquid constituted of either a monofunctional acrylate or a bifunctional acrylate, or of both of them can be used in the ink of the present invention.

Generally, since the black ink is low in light transmittance, it would be desirable that, for the case of the black ink, bifunctional and monofunctional acrylates of high reactivity are used.

Moreover, there is no particular restriction as to the colorant and, besides the carbon black employed in Examples 1 to 12, any of a variety of pigments and dyes that are commonly used can also be employed.

Examples of the pigment used in the present invention include an azo lake pigment, a polycyclic pigment, a lake dye, an organic pigment, an inorganic pigment, and the like. Examples of the azo lake pigment include, e.g., an insoluble azo pigment, an azo condensation pigment, and a chelate azo pigment; examples of the polycyclic pigment include, e.g., a phthalocyanine pigment, a perylene or perynone pigment, an anthraquinone pigment, a quinacridone pigment, a dioxadine pigment, a thioindigo pigment, an isoindolinone pigment, and a quinophthalone pigment; examples of the lake dye include, e.g., a basic dye-type lake and an acidic dye-type lake; examples of the organic pigment include, e.g., a nitro pigment, a nitroso pigment, and aniline black; and examples of the inorganic pigment include, e. g., titanium oxide and iron oxide.

Moreover, the use of a dye-type colorant in combination with a pigment-type colorant is also possible.

Generally, although a (meth)acrylate is low in reactivity and thus unsuitable for the case of adding a black pigment, in the case where a color pigment is to be employed as in Examples 13 to 15, for example, a (meth)acrylate such as 2-methoxyethyl acrylate can be used.

Further, besides those mentioned in Examples 1 to 15, it is possible to employ a variety of monofunctional monomers and bifunctional monomers provided that the viscosity of the resulting resin liquid or the average viscosity falls within the above-mentioned range. For example, as the bifunctional monomer, 1,3-butanediol diacrylate (viscosity: 9.0 mPa˙s), 1,6-hexanediol diacrylate (viscosity: 7.5 mPa˙s), 1,9-nonanediol diacrylate (viscosity: 9.3 mPa˙s), and others can also be employed.

Furthermore, as the dispersant for use in the ink of the present invention, any of a wide range of amine-type, neutral, and acidic dispersants can be employed.

Employable as the amine-type dispersant is, for example, "Ajisper B711" or "Ajisper PB821" (trade name) manufactured by Ajinomoto Co., Inc. or "Disper BYK161," "Disper BYK163," or "Disper BYK110" (trade name) manufactured by Byk-Chemie; as the neutral or medium polar solvent-use dispersant is "Ajisper PN411" (trade name) manufactured by Ajinomoto Co., Inc. or "Solsperse S13240, "Solsperse S24000," "Solsperse S24000GR," "Solsperse S34750," or "Solsperse S32550" (trade name) manufactured by Zeneca; and as the acidic dispersant is "Ajisper PA111" (trade name) manufactured by Ajinomoto Co., Inc. or "Disper BYK110" (trade name) manufactured by Byk-Chemie.

Moreover, besides the dispersants described above, "Solsperse S13940" (trade name) which is a dispersant for a non-polar solvent manufactured by Zeneca, "Disper BYKP-1045" (trade name) which is a polysiloxane-type dispersant manufactured by Byk-Chemie, and "Plenact AL-M" (trade name) which is an aluminum-based coupling agent manufactured by Ajinomoto Co., Inc. are also available.

There is no particular restriction as to the photopolymerization initiator to be added to the resin liquid, and any of a variety of initiators can be used.

Although Examples 1 to 15 are cases in which the photoreactive monomer in the resin liquid is cured by ultraviolet rays, the present invention is not limited thereto. For example, the use of an electron beam instead of ultraviolet rays is also feasible. In this case, the photoreactive monomer in the resin liquid is curable without the addition of a photopolymerization initiator.

The resin (s) to be used in the resin liquid of the present invention is not limited to a photoreactive monomer (s) and, if an electron beam is employed for curing, an electron beam-curable resin can be used.

Although the examples aforementioned are cases which one monofunctional monmer and/or one bifunctional monomer are used, the present invention is not limited thereto. For example, the use of at least two monofunctional monomer and/or at least two bifunctional monomer is also feasible.

Furthermore, if necessary, to the ink of the present invention may be added an anti-foaming agent, wax, an antioxidant, a stabilizer, an antistatic agent, etc.

Hereinafter, the process for producing a printed product using the ink of the present invention will be described.

The reference numeral 11 in Fig. 1 (a) denotes a transparent substrate made of polyethylene terephthalate (hereinafter, abbreviated as PET).

A resin liquid was obtained by dissolving 15 parts by weight of a resin constituted of polyester having a glass transition temperature of 65°C (trade name "UE3200" manufactured by Unitika Ltd.) in 85 parts by weight of methyl ethyl ketone while stirring. The resin liquid was coated over the transparent substrate 11 with a coil bar, and then the coat was dried at 100°C for 3 minutes in a convection oven to form an ink-receiving layer 12 mainly made of the polyester resin. The ink-receiving layer 12 was formed so as to have a thickness of 10 µm.

The reference numeral 10 in Fig. 1 (b) denotes a recording sheet provided with this ink-receiving layer 12.

Then, the inks in Examples 12 to 15 different in color were fed to the same ink jet printer (trade name "MJ930C" manufactured by Seiko Epson Corporation). Droplets 16 of each of the inks of Examples 12 to 15 were ejected from the nozzle of the ink jet printer against the surface of the ink-receiving layer 12 of the recording sheet 10 to print an image in color (Fig. 1 (c)).

The reference numeral 17 in Fig. 1 (d) denotes an ink ejected from the nozzle and hit against the surface of the ink-receiving layer 12. Since the ink-receiving layer 12 is principally constituted of polyester resin, the ink 17 hit against the surface of the ink-receiving layer 12 is not absorbed into the ink-receiving layer 12 and stays thereon.

The surface of the ink-receiving layer 12 was subsequently subjected to ultraviolet ray irradiation at 1,200 mJ/cm$^2$ by an 80-W metal halide lamp to cure the ink 17 remaining thereon.

The ink 17 cured by ultraviolet rays is observed as a dot 18, and an aggregate of these dots 18 is perceived as a printed image.

The reference numeral 1 in Fig. 1 (e) denotes the printed product of the present invention where dots 18 are formed on the surface of the ink-receiving layer 12 thereof.

This printed product 1 was subjected to "curability test" under the same conditions as in Examples 1 to 11 and examined for the following tests: dot diameter, print quality, and cured state.

The results of evaluation are shown in Table 9 below as Example 16. In Table 9, the thicknesses of the ink-receiving layers 12 in Examples 17 to 25 that will later be described are shown together with the thickness of the layer of Example 16. [Dot diameter]

Using a water-base pigment ink "SPC-0180" (trade name) manufactured by Mimaki Engineering Co., Ltd., on a recording sheet as the standard (trade name "Gloss white PET" manufactured by Asahi Glass Co., Ltd.) was printed an image in the same manner as in Example 16 to provide a printed product as the standard.

Letting the diameter of each of the dots constituting the image printed on the printed product as the standard be 1, if the diameter of each of the dots forming the image printed on the printed product 1 of Example 16 was 0.8 or larger but smaller than 1.3, it was graded ○. If the diameter was smaller than 0.8, or 1.3 or larger, it was graded ×.

[Print quality]

The image printed on the printed product 1 of Example 16 was visually inspected and graded as follows.

○: Printed image was not blurred.
Δ: The periphery of the printed image was blurred.
×: The whole printed image was blurred.

[Cured state]

The image printed on the printed product 1 of Example 16 was visually inspected and evaluated as follows.

○: The printed image is completely dry and not sticky.

×: The printed image is not completely dry and smells of a monomer.

The results of evaluation carried out for dot diameter, print quality, cured state, and curability are shown in Table 9 below.

Table 9

| | Resin | Glass transition temprature (°C) | Receiving layer thickness (μm) | Dot diameter | Print quality | Cured state | Curability |
|---|---|---|---|---|---|---|---|
| | | | | Evaluation of Printed Image | | | |
| Example 16 | Polyester resin | 65 | 10 | ○ | ○ | ○ | ○ |
| Example 17 | Polyester resin | 45 | 10 | ○ | ○ | ○ | ○ |
| Example 18 | Polyester resin | 55 | 10 | ○ | ○ | ○ | ○ |
| Example 19 | Polyester resin | 60 | 10 | ○ | ○ | ○ | ○ |
| Example 20 | Styrene-acrylic resin | — | 10 | ○ | ○ | ○ | ○ |
| Example 21 | Styrene-acrylic resin | — | 10 | ○ | ○ | ○ | ○ |
| Example 22 | Styrene-acrylic resin | — | 10 | ○ | ○ | ○ | ○ |
| Example 23 | Styrene-acrylic resin | — | 10 | ○ | ○ | ○ | ○ |
| Example 24 | Epoxy resin | — | 10 | ○ | ○ | ○ | ○ |
| Example 25 | Phenoxy resin | — | 10 | ○ | ○ | ○ | ○ |
| Example 26 | Polyester resin | 65 | 5 | ○ | ○ | ○ | ○ |
| Example 27 | Polyester resin | 65 | 50 | ○ | ○ | ○ | ○ |
| Comparative Example 3 | — | — | — | × | × | ○ | ○ |
| Comparative Example 4 | — | — | — | ○ | Δ | × | × |

<Examples 17 to 19>

Three types of resin liquids were prepared under the same conditions as in Example 16 using, instead of the polyester resin employed in Example 16. The used polyester resins are a polyester resin having a glass transition temperature of 45°C (trade name "UE 3200" manufactured by Unitika Ltd.), a polyester resin having a glass transition temperature of 55°C (trade name "UE 3350" manufactured by Unitika Ltd.), and a polyester resin having a glass transition temperature of 60°C (trade name "UE 3360" manufactured by Unitika Ltd.). Then, the recording sheets 10 of Examples 17 to 19 were fabricated using these three types of resin liquids by following the same procedure as that in Example 16.

Under the same conditions as in Example 16, dots 18 were formed on the surfaces of the ink-receiving layers 12 of the recording sheets 10 of Examples 17 to 19 to provide three types of printed products 1.

These three types of printed products 1 were examined for dot diameter, print quality, cured state, and curability under the same conditions as in Example 16. The results of evaluation are shown in Table 9 above.

<Examples 20 to 23>

Four types of resin liquids were prepared using not polyester resins but four kinds of styrene-acrylic resins, and the recording sheets 10 of Examples 20 to 23 were fabricated in the same manner as in Example 16.

The styrene-acrylic resin in Example 20 is "SB305" (trade name) manufactured by Sanyo Chemical Industries, Ltd., and the styrene-acrylic resin in Example 21 is "SB306" (trade name) manufactured by Sanyo Chemical Industries, Ltd. The styrene-acrylic resin in Example 22 is "SB308" (trade name) manufactured by Sanyo Chemical Industries, Ltd., and the styrene-acrylic resin in Example 23 is "TB1000F" (trade name) manufactured by Sanyo Chemical Industries, Ltd.

Following the same procedure as that in Example 16, dots 18 were formed on the surfaces of the ink-receiving layers 12 of the recording sheets 10 of Examples 20 to 23 to provide four types of printed products 1.

These four types of printed products 1 were examined for dot diameter, print quality, cured state, and curability under the same conditions as in Example 16. The results of evaluation are shown in Table 9 above.

<Example 24>

A resin liquid was prepared not from a polyester resin but from an epoxy resin (trade name "YDCN-705" manufactured by Tohto Kasei K.K.), and the recording sheet 10 of Example 24 was fabricated in the same manner as in Example 16.

Following the same procedure as that in Example 16, dots 18 were formed on the surface of the ink-receiving layer 12 of the recording sheet 10 of Example 24 to provide a printed product 1.

The printed product 1 thus obtained was examined for dot diameter, print quality, cured state, and curability under the same conditions as in Example 16. The results of evaluation are shown in Table 9 above.

<Example 25>

A resin liquid was prepared not from a polyester resin but from a phenoxy resin (trade name "YP50" manufactured by Tohto Kasei co., Ltd.), and the recording sheet 10 of Example 25 was fabricated in the same manner as in Example 16.

Following the same procedure as that in Example 16, dots 18 were formed on the surface of the ink-receiving layer 12 of the recording sheet 10 of Example 25 to provide a printed product 1.

The printed product 1 thus obtained was examined for dot diameter, print quality, cured state, and curability under the same conditions as in Example 16. The results of evaluation are shown in Table 9 above.

<Examples 26 and 27>

Using the same resin liquid as that employed in Example 16, as shown in Table 9, the recording sheet 10 of Example 26 having a thickness of the ink-receiving layer 12 of 5 μm, and the recording sheet 10 of Example 27 having a thickness of the ink-receiving layer 12 of 50 μm were fabricated, respectively.

Under the same conditions as in Example 16, dots 18 were formed on the surfaces of the ink-receiving layers 12 of the recording sheets 10 of Example 26 and 27 to provide two types of printed products 1.

These two types of printed products 1 thus obtained were examined for dot diameter, print quality, cured state, and curability under the same conditions as in Example 16. The results of evaluation are shown in Table 9 above.

<Comparative Examples 3 and 4>

Using the substrate provided with no ink-receiving layer shown in Fig. 1 (a) and a sheet for water ink (trade name "Gloss white PET" manufactured by Asahi Glass Co., Ltd.) as the recording sheets of Comparative Examples 3 and 4, respectively, images were printed thereon in the same manner as in Example 16 to provide two types of printed products.

These two types of printed products thus obtained were examined for dot diameter, print quality, cured state, and curability under the same conditions as in Example 16. The results of evaluation are shown in Table 9 above.

As is obvious from Table 9 above, the recording sheets 10 of Examples 16 to 27 provided good results in the examinations made for dot diameter, print quality, cured state, and curability.

On the other hand, in Comparative Example 3 being the case of the recording sheet having no ink-receiving layer, the ink was spread on the surface of the substrate, and the test results of this sheet were inferior in dot diameter and print quality to those of the sheets of Examples 16 to 27.

Moreover, the recording sheet having a high ink absorbency of Comparative Example 4 was, as compared to the recording sheets of Examples 16 to 27, poor in cured state and curability. This is because ultraviolet rays did not reach the inside of the sheet and thus the ink absorbed into the recording sheet of Comparative Example 4 was not cured.

The above embodiments were described for cases where the ink-receiving layer 12 is principally constituted of one kind of resin, but the present invention is not limited thereto. The main component of the ink-receiving layer 12 can be a mixture of two or more kinds of resins selected from the polyester resin, styrene-acrylic resin, epoxy-resin, and phenoxy-resin employed in Examples 16 to 25.

As was described above, the present invention provides, without using an organic solvent, an ink which shows excellent ink ejection smoothness in ink jet printers.

**Claims**

1. An ink comprising:

   at least one colorant; and
   a resin liquid containing at least one photoreactive monofunctional monomer or at least one photoreactive bifunctional monomer,
   wherein a viscosity of the resin liquid at 25°C is 1.0 mPa·s or more but 10.5 mPa·s or less.

2. An ink comprising:

   at least one colorant; and
   a resin liquid containing at least one photoreactive monofunctional monomer and at least one photoreactive bifunctional monomer,
   wherein an average viscosity A of the resin liquid at 25°C calculated using the formula: $A = (W_1 \times A_1 + W_2 \times A_2)/(W_1 + W_2)$ where $A_1$ is a viscosity of the photoreactive monofunctional monomer at 25°C, $A_2$ is a viscosity of the photoreactive bifunctional monomer at 25°C, $W_1$ is a weight of the photoreactive monofunctional monomer, and $W_2$ is a weight of the photoreactive bifunctional monomer, is 1.0 mPa·s or more but 10.5 mPa·s or less.

3. The ink according to claim 2, wherein the viscosity $A_1$ of the photoreactive monofunctional monomer at 25°C is 1.0 mPa·s or more but 3.0 mPa·s or less and the viscosity $A_2$ of the photoreactive bifunctional monomer at 25°C is 5.0 mPa·s or more but 10.5 mPa·s or less.

4. The ink according to claim 1, wherein functional groups of the photoreactive monofunctional monomer and the photoreactive bifunctional monomer are acryloyl groups.

5. The ink according to claim 2, wherein functional groups of the photoreactive monofunctional monomer and the photoreactive bifunctional monomer are acryloyl groups.

6. The ink according to claim 3, wherein functional groups of the photoreactive monofunctional monomer and the photoreactive bifunctional monomer are acryloyl groups.

7. A printed product comprising:
   an ink-receiving layer containing as a main component at least one resin selected from a group consisting of polyester resin, styrene-acrylic resin, epoxy resin, and phenoxy resin, and being formed an image on a surface of the ink-receiving layer, wherein the image is made with an ink comprising at least one colorant, and a resin liquid containing at least one photoreactive monofunctional monomer or at least one photoreactive bifunctional monomer, wherein a viscosity of the resin liquid at 25°C is 1.0 mPa·s or more but 10.5 mPa·s or less.

8. A printed product comprising:

an ink-receiving layer containing as a main component at least one resin selected from a group consisting of polyester resin, styrene-acrylic resin, epoxy resin, and phenoxy resin, and being formed an image on a surface of the ink-receiving layer, wherein the image is made with an ink comprising at least one colorant, and a resin liquid containing at least one photoreactive monofunctional monomer and at least one photoreactive bifunctional monomer,wherein an average viscosity A of the resin liquid at 25°C calculated using the formula: $A = (W_1 \times A_1 + W_2 \times A_2)/(W_1 + W_2)$ where $A_1$ is a viscosity of the photoreactive monofunctional monomer at 25°C, $A_2$ is a viscosity of the photoreactive bifunctional monomer at 25°C, $W_1$ is a weight of the photoreactive monofunctional monomer, and $W_2$ is a weight of the photoreactive bifunctional monomer, is 1.0 mPa·s or more but 10.5 mPa·s or less.

9. The printed product according to claim 8, wherein the viscosity $A_1$ of the photoreactive monofunctional monomer at 25°C is 1.0 mPa·s or more but 3.0 mPa·s or less and the viscosity $A_2$ of the photoreactive bifunctional monomer at 25°C is 5.0 mPa· s or more but 10.5 mPa·s or less.

10. The printed product according to claim 7, wherein functional groups of the photoreactive monofunctional monomer and the photoreactive bifunctional monomer are acryloyl groups.

11. The printed product according to claim 8, wherein functional groups of the photoreactive monofunctional monomer and the photoreactive bifunctional monomer are acryloyl groups.

12. The printed product according to claim 7, wherein the glass transition temperature of the polyester resin is 40°C or more but less than 70°C.

13. The printed product according to claim 8, wherein the glass transition temperature of the polyester resin is 40°C or more but less than 70°C.

*Fig.1a*

*Fig.1b*

*Fig.1c*

*Fig.1d*

*Fig.1e*

**European Patent Office**

## EUROPEAN SEARCH REPORT

Application Number

EP 01 10 8533

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | GB 2 318 356 A (WILLETT INT LTD) 22 April 1998 (1998-04-22) * page 5, line 5-13 * * page 5, line 27-32 * * page 6, line 12-15 * * page 6, line 24 - page 7, line 29 * * example 1 * | 1,4 | C09D11/00 C09D11/10 |
| A | * page 4, line 18-25 * <br> * page 8, line 32 - page 9, line 4 * | 2,3, 5-11,13 | |
| X | EP 0 465 039 A (DOMINO PRINTING SCIENCES PLC) 8 January 1992 (1992-01-08) * column 2, line 14-29 * * column 2, line 57 - column 3, line 37 * * column 4, line 7-27 * * column 5, line 27 * * claims 3,4 * | 1,4 | |
| A | EP 0 540 203 A (DOMINO PRINTING SCIENCES PLC) 5 May 1993 (1993-05-05) * column 2, line 35-58 * * column 3, line 20-29 * * column 3, line 35-44 * * column 4, line 30-56 * * claims 2,4 * | 1,4 | TECHNICAL FIELDS SEARCHED (Int.Cl.7) C09D |

The present search report has been drawn up for all claims

| Place of search | Date of completion of the search | Examiner |
|---|---|---|
| THE HAGUE | 25 June 2001 | Miller, A |

**ANNEX TO THE EUROPEAN SEARCH REPORT
ON EUROPEAN PATENT APPLICATION NO.** EP 01 10 8533

This annex lists the patent family members relating to the patent documents cited in the above-mentioned European search report.
The members are as contained in the European Patent Office EDP file on
The European Patent Office is in no way liable for these particulars which are merely given for the purpose of information.

25-06-2001

| Patent document cited in search report | | Publication date | Patent family member(s) | | Publication date |
|---|---|---|---|---|---|
| GB 2318356 | A | 22-04-1998 | AU | 4785397 A | 11-05-1998 |
| | | | WO | 9816590 A | 23-04-1998 |
| EP 0465039 | A | 08-01-1992 | DE | 69106952 D | 09-03-1995 |
| | | | DE | 69106952 T | 24-05-1995 |
| | | | JP | 5214279 A | 24-08-1993 |
| | | | US | 5275646 A | 04-01-1994 |
| EP 0540203 | A | 05-05-1993 | DE | 69215835 D | 23-01-1997 |
| | | | DE | 69215835 T | 03-04-1997 |
| | | | JP | 5214280 A | 24-08-1993 |
| | | | US | 5275646 A | 04-01-1994 |

EPO FORM P0459

For more details about this annex : see Official Journal of the European Patent Office, No. 12/82